Europäisches Patentamt

European Patent Office

Office européen des brevets

(11) Veröffentlichungsnummer: **0 232 546**

**A1**

(12) **EUROPÄISCHE PATENTANMELDUNG**

(21) Anmeldenummer: 86118047.9

(22) Anmeldetag: 24.12.86

(51) Int. Cl.⁴: **F04D 29/04 , H01S 3/03**

(30) Priorität: 04.01.86 DE 3600124

(43) Veröffentlichungstag der Anmeldung:
19.08.87 Patentblatt 87/34

(84) Benannte Vertragsstaaten:
AT DE FR GB IT

(71) Anmelder: **Fortuna-Werke Maschinenfabrik GmbH**
**Pragstrasse 140**
**D-7000 Stuttgart 50(DE)**

(72) Erfinder: **Jesinger, Richard**
**Faissstrasse 11**
**D-7300 Esslingen(DE)**

(74) Vertreter: **Patentanwälte Kohler - Schwindling - Späth**
**Hohentwielstrasse 41**
**D-7000 Stuttgart 1(DE)**

(54) **Gebläse zum Umwälzen grosser Gasmengen, insbesondere für Hochleistungs-Laser nach dem Gastransport-Prinzip.**

(57) Ein Gebläse (10) dient zum Umwälzen großer Gasmengen, insbesondere für Hochleistungs-Laser nach dem Gastransport-Prinzip. Es umfaßt ein Gasförderteil (11) und ein Antriebsteil (12), wobei das Gasförderteil (11) einen Radialförderer (16) aufweist, der in einer Verbindungsstrecke zwischen zwei Gaskanälen (18, 20) des Gasförderteils (11) angeordnet ist. Das Antriebsteil (12) umfaßt eine Welle (33) zum Antreiben des Radialförderers (16) mit hohen Drehzahlen.

Um extrem große Gasmengen, typischerweise im Bereich von mehreren 10.000 Kubikmetern pro Stunde umwälzen zu können, ist die Welle (33) mit Radial-Drehlagern (34, 35) in einem Gehäuse (30) gelagert, die Unterseite (125) des Radialförderers (16) ist als Axial-Spiralrillenlager und die Radial-Drehlager (34, 35) sind als Luftlager (90, 92) ausgebildet.

Fig. 2

## Gebläse zum Umwälzen großer Gasmengen, insebesondere für Hochleistungs-Laser nach dem Gastransport-Prinzip

Ein derartiges Gebläse ist aus der US-PS 3 951 573 bekannt.

Bei dem bekannten Gebläse wird das Axial-Spiralrillenlager dadurch gebildet, daß an der Unterseite des Radialförderers eine mit diesem umlaufende Flanschplatte vorgesehen ist, die an ihrer vom Radialförderer abgewandten Seite eine radiale Kreisringfläche bildet. In geringem Abstand gegenüber dieser radialen Kreisringfläche befindet sich eine gehäusefeste Druckplatte, die über ihren Umfang mit Spiralnuten versehen ist. Der durch dieses Axial-Spiralrillenlager erzeugte Gasdruck dient im wesentlichen zum axialen Abstützen des Radialförderers. Darüber hinaus dient dieser Druck aber auch dazu, zwei Luft-Radial-Drehlager mit Gasdruck zu versorgen, von denen das eine dicht unterhalb des Radialförderers und das andere am entgegengesetzten freien Ende der Welle angeordnet ist. Hierzu läuft die Welle in einem zylindrischen, gasdichten Gehäuse. Zwischen den beiden Luft-Radial-Drehlagern ist auf einen verjüngten Abschnitt der Welle eine Wicklung aufgebracht, die als Antriebselement mit gehäusefesten Statorwicklungen zusammenwirkt. Der vom Axial-Spiralrillenlager erzeugte Gasdruck dient schließlich auch dazu, um auf die radiale Stirnfläche am freien Ende der Welle zu wirken und damit die axiale Stützkraft weiter zu erhöhen.

Um den Anlauf des bekannten Gebläses zu erleichtern, ist am freien Ende der Welle eine mittels einer axialen Schraube verstellbare Stützeinrichtung vorgesehen, mit der eine Stange in den Bereich der Welle geschraubt werden kann, die an ihrem oberen Ende mit einer Kugel versehen ist. Beim Einschrauben der Stange gelangt die Kugel in Anlage an eine kegelige Lagerfläche in der radialen Endfläche am freien Ende der Welle, so daß durch Einschrauben der Stange die Welle und damit auch der Radialförderer axial abgehoben werden kann. Wenn die Welle ihre Nenndrehzahl erreicht hat und der Druck im Axial-Spiralrillenlager ausreicht, um die Welle zu tragen, kann die starre Abstützung am unteren Ende der Welle wieder entfallen, und die Stange wird wieder in das Gehäuse zurückgeschraubt, wodurch die Kugel wieder von der kegeligen Lagerfläche abhebt.

Bei dem bekannten Gebläse läuft die Welle insgesamt in einer geschlossenen Sackbohrung, so daß die Druckverteilung in dieser Sackbohrung weitgehend unbeeinflußbar und ungeregelt ist. Auch eine kontrollierte Gasströmung innerhalb der Sackbohrung stellt sich nicht ein. Wenn nach einer Variante des bekannten Gebläses sogar ein Teil der Wandung der Sackbohrung entfernt wird, so daß Druckgas aus der Sackbohrung ins Freie ausströmen kann, ist darüber hinaus eine Druckluftversorgung des unteren Luft-Radial-Drehlagers nicht mehr möglich, und auch die axiale Abstützung über den Gasdruck kann nicht mehr erfolgen.

Aus der DE-OS 32 45 959 ist ein Radialgebläse bekannt, das dazu dient, um mit einem Laser nach dem Gastransport-Prinzip das Gas, beispielsweise $CO_2$ oder eine $N_2$/He-Mischung, zwischen einer Anregungsstrecke und einer Kühlstrecke umzuwälzen. Bekanntlich nehmen nämlich bei derartigen Lasern verschiedene Leistungsdaten mit steigender Temperatur im Lasergas ab. Bei der bekannten Anordnung soll daher erreicht werden, daß durch kontinuierliche Umwälzung des Gases zwischen Anregungsstrecke und einem Wärmetauscher die Gastemperatur stets ausreichend niedrig gehalten wird.

Will man die bekannte Anordnung bei Hochleistungs-Lasern mit sehr hohen Ausgangsleistungen einsetzen, ist es erforderlich, das Gas im Laser mit Förderraten von mehreren tausend oder zehntausend Kubikmetern pro Stunde umzuwälzen. Hierzu sind Drehzahlen des Radialförderers von einigen zehntausend bis hunderttausend Umdrehungen pro Minute erforderlich, was andererseits zu Umfanggeschwindigkeiten am Radialförderer von über 600 Metern pro Sekunde und zu Antriebsleistungen in der Größenordnung von einigen zehn kW führt.

Bei dem aus der DE-OS 32 45 959 bekannten Gebläse bleibt offen, auf welche Weise der Radialförderer angetrieben werden soll.

Das Gebläse gemäß US-PS 3 951 573 ist für diesen Einsatzfall jedoch ebenfalls nicht geeignet, weil die dort beschriebene Lagerung noch nicht ausreicht, um die hoch anzusetzenden Forderungen zu erfüllen, die in dem genannten Drehzahlbereich eingehalten werden müssen. Dies gilt insbesondere dann, wenn bei dem bekannten Gebläse ein Teil der zylindrischen Begrenzungswand der Sackbohrung entfernt wird, weil dann die für hohe Drehzahlen unabdingbar erforderlichen Lagereigenschaften nicht mehr gewährleistet werden können.

Der Erfindung liegt daher die Aufgabe zugrunde, ein Gebläse der eingangs genannten Art dahingehend weiterzubilden, daß die Lagereigenschaften weiter verbessert, insbesondere reproduzierbar gestaltet werden können, so daß Drehzahlen bis hin zu mehreren einhunderttausend Umdrehungen pro Minute erreicht werden können, die für den Einsatz bei Hochleistungs-Lasern erforderlich sind.

Diese Aufgabe wird erfindungsgemäß gelöst, daß die Unterseite des Radialförderers mit den Spiralnuten versehen ist, daß ein erster Kanal den ersten Gasraum mit dem zweiten Gasraum verbindet, daß ein zweiter Kanal den zweiten Gasraum an den dritten Gasraum anschließt und daß ein Abströmkanal vom zweiten Gasraum zum Außenraum führt.

Die der Erfindung zugrundeliegende Aufgabe wird auf diese Weise gelöst, weil mittels der Kanäle und der genannten Räume ein definierter und einstellbarer Gasstrom zwischen den Lagern erreicht wird. Insbesondere wird auf diese Weise eine Gasspülung der Lager erreicht, weil stets ein gewisser Gasstrom durch die Lagerflächen strömt, während bei dem bekannten Gebläse in der Sackbohrung (sofern die Begrenzungswand undurchbrochen ist) lediglich eine Druckerhöhung oder Druckverminderung stattfindet, ohne daß dort Gasmassen umgewälzt werden.

Durch die erfindungsgemäße Anordnung kann jedoch durch geeignete Dimensonierung der Kanäle erreicht werden, daß die Luft-Radial-Drehlager -auch bei unterschiedlichen Drehzahlen -stets mit der erforderlichen Gasmenge versorgt werden, und auch die axiale Stützwirkung an dem als Kolben wirkenden freien Ende der Welle kann je nach Betriebsbedingungen oder nach Dimensionierung der übrigen Gebläseelemente reproduzierbar eingestellt werden.

Bei einer bevorzugten Ausgestaltung der Erfindung ist im Abströmkanal eine einstellbare Drossel angeordnet.

Auch diese Maßnahme dient dazu, die Gasströme in der bereits genannten Weise reproduzierbar einstellen zu können.

Bei einer weiteren Ausführungsform der Erfindung ist eine Druckgaspumpe an den dritten Gasraum angeschlossen, und im zweiten Kanal ist eine Drossel angeordnet.

Diese Maßnahme hat den Vorteil, daß -sei es beim Anlaufen des Gebläses, sei es im Dauerbetrieb -mittels der Druckgaspumpe ein weiterer Druck erzeugt werden kann, der sowohl den Luft-Radial-Drehlagern wie auch der axialen Luftpolster-Abstützung der Welle zugute kommt. Mittels der Drossel im zweiten Kanal und/oder der Drossel im Abströmkanal können wiederum definierte Druck- und Durchströmverhältnisse an den verschiedenen Lagerstellen eingestellt werden.

Bei einer weiteren bevorzugten Ausgestaltung der Erfindung ist vorgesehen, die Druckgaspumpe mit einem Gas zu betreiben, das mit dem vom Gebläse geförderten Gas übereinstimmt. Diese Maßnahme ist zwar an sich aus der DE-AS 23 15 093 bekannt, dort werden jedoch selbstschmierende Gaslager verwendet, so daß sich die Verwendung eines mit dem geförderten Gas übereinstimmenden Gases von selbst ergibt.

Bei einer weiteren Ausgestaltung der Erfindung wird eine weitere axiale Stützkraft für die Welle als Magnetkraft aufgebracht.

Diese Maßnahme hat den Vorteil, daß eine - schnelle Einstellung der Stützkraft möglich ist, wobei die Einstellung über einen Magneten noch den zusätzlichen Vorteil hat, daß keine mechanisch bewegten Elemente erforderlich sind.

Allerdings ist diese Maßnahme an sich aus der US-PS 3 731 984 -wenngleich nicht für eine luftgelagerte Welle -bekannt.

Bei einer bevorzugten Ausbildung dieser Variante ist das untere Ende der Welle mit magnetisierten Zonen versehen, und im Gehäuse unterhalb des Endes der Welle ist ein Elektromagnet angeordnet. Dabei besteht der Elektromagnet vorzugsweise aus einem das untere Ende der Welle anziehenden Permanentmagneten mit einer die Wirkung des Permanentmagneten schwächenden Erregerwicklung.

Diese Maßnahme hat den Vorteil, daß nur bei niedrigen Drehzahlen, wie sie beim An-und Auslaufen des Gebläses auftreten, die Erregerwicklung eingeschaltet zu werden braucht, damit in diesem Betriebszustand die Welle nicht axial nach unten gezogen wird. Erst bei höheren Drehzahlen besteht eine beträchtliche, nach oben gerichtete Saugkraft auf den Radialförderer, ebenso wie ggf. eine nach oben gerichtete axiale Lagerkraft des Axial-Spiralrillenlagers. Diese beiden nach oben gerichteten Kräfte können dann durch die Wirkung des Permanentmagneten kompensiert werden, dessen Wirkung durch Abschalten der Erregerwicklung kontinuierlich oder stufenweise freigegeben wird.

Weitere Vorteile ergeben sich aus der Beschreibung und der beigefügten Zeichnung.

Es versteht sich, daß die vorstehend genannten und die nachfolgend noch geschilderten Merkmale nicht nur in der jeweils angegebenen Kombination, sondern auch in anderen Kombinationen oder auch in Alleinstellung verwendet werden können, ohne den Rahmen der vorliegenden Erfindung zu verlassen.

Es versteht sich vor allem, daß der genannte Anwendungsfall bei Lasern nach dem Gastransport-Prinzip nur beispielhaft zu verstehen ist und daß das erfindungsgemäße Gebläse selbstverständlich auch bei zahlreichen anderen Anwendungsfällen eingesetzt werden kann, bei denen im Rahmen industrieller Fertigungsprozesse Gasdurchsätze mit hoher Förderrate benötigt werden.

Ausführungsbeispiele der Erfindung sind in der Zeichnung dargestellt und werden nachfolgend anhand der Beschreibung erläutert. Es zeigen:

Fig. 1 eine schematische Darstellung eines erfindungsgemäßen Gebläses mit zugehörigen Druckmittelkreisläufen, in Gesamtansicht;

Fig. 2 in vergrößertem Maßstab die mechanische Einzelheiten eines Antriebes eines Gebläses ähnlich Fig. 1, jedoch mit Luftlagern;

Fig. 3 einen Radialförderer, in einer Ansicht von unten, im Maßstab der Fig. 1;

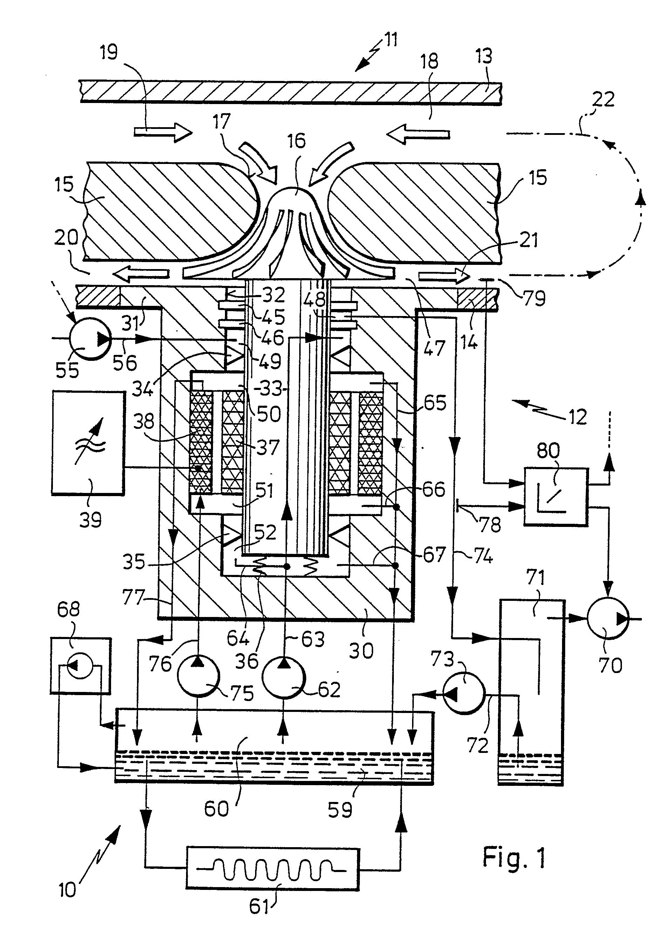

In Fig. 1 bezeichnet 10 als Ganzes ein Ausführungsbeispiel eines erfindungsgemäßen Gebläses. Das Gebläse 10 wird grob in ein Gasförderteil 11 und ein Antriebsteil 12 unterteilt.

Das Gasförderteil 11 umfaßt alle für die Förderung und Leitung des Gases erforderlichen Elemente. Hierzu sind zwischen einer oberen Begrenzungswand 13 und einer unteren Begrenzungswand 14 Leit-und Trennelemente 15 vorgesehen, die zwischen sich eine Verbindungsstrecke freilassen, in der ein Radialförderer 16 angeordnet ist. Die Oberflächenkontur 17 der Leit-und Trennelemente 15 sind an die entsprechende Oberflächenkontur des Radialförderers 16 angepaßt.

Auf diese Weise umfaßt das Gasförderteil 11 einen oberen Gaskanal 18, in dem ein Gas, beispielsweise eine Edelgasmischung, in Richtung der mit 19 bezeichneten Pfeile strömen kann sowie einen unteren Gaskanal 20, in dem das Gas die Richtung von Pfeilen 21 aufweist. Die Gaskanäle 18, 20 treffen sich im Bereich weiterer Umlenkelemente, wie mit einer Bahn 22 in Fig. 1 angedeutet.

Wird das erfindungsgemäße Gebläse 10 beispielsweise bei einem Hochleistungs-Laser eingesetzt, so kann der obere Gaskanal 18 die Anregungsstrecke sein, während sich zweckmäßigerweise im Verlaufe des unteren Gaskanals 20 ein oder mehrere Wärmetauscher befinden können, um das umgewälzte Gas zu kühlen.

Es versteht sich ferner, daß die eingezeichnete Richtung der Pfeile 19, 21 bei entsprechender Dimensionierung der Schaufeln des Radialförderers 16 auch entgegengesetzt sein kann. Es sei ferner nochmals betont, daß das Anwendungsbeispiel von Lasern nach dem Gastransport-Prinzip im vorliegenden Zusammenhang nur als illustrierendes Beispiel dient und die Erfindung keinesfalls auf diesen Anwendungsfall einschränkt.

Das Antriebsteil 12 umfaßt im wesentlichen ein zylindrisches Gehäuse 30, das an seiner Oberseite in einen Ringflansch 31 ausläuft, der in die untere Begrenzungswand 14 integriert oder an dieser angeschraubt ist.

Im Zentrum des Ringflansches 31 befindet sich eine Öffnung 32, durch die eine Welle 33 ragt, an der der Radialförderer 16 drehstarr angesetzt ist.

Die Welle 33 ist in einem oberen Radiallager 34 und einem unteren Radiallager 35 gehalten, an ihrer Unterseite ist sie mit einer federnden Abstützung 36 gegenüber dem Gehäuse 30 versehen.

Es sei an dieser Stelle auch betont, daß die im vorliegenden Zusammenhang verwendeten Begriffe "oben" und "unten", ebenso wie die Darstellung in den Figuren nur beispielhaft zu verstehen ist. Das erfindungsgemäße Gebläse kann selbstverständlich auch in horizontaler Einbaulage oder nach unten gerichtet eingesetzt werden, ohne daß dies den Rahmen der Erfindung sprengt.

Die Welle 33 ist mit einer Rotorwicklung 37 versehen, die zwischen den Radiallagern 34 und 35 angeordnet ist. Der Rotorwicklung 37 steht eine Statorwicklung 38 gegenüber, die am Gehäuse 30 angeordnet ist. Die Statorwicklung 38 steht mit einem Versorgungsaggregat 39 in Verbindung, das eine elektrische Versorgungsspannung geeigneter Amplitude und Frequenz, insbesondere variabler Frequenz, erzeugt. Typischerweise hat das Versorgungsaggregat 39 eine Ausgangsleistung zwischen einem und 50 KW, wobei die Ausgangsfrequenz zwischen 700 und 3000 Hz einstellbar ist.

Außerdem enthält das Versorgungsaggregat 39 noch in Fig. 1 der Übersichtlichkeit halber nicht dargestellte Auswerteinheiten für die Überwachung der Schmieröltemperatur, der Schmierölmenge, der Leistungsaufnahme sowie eine Erkennungsschaltung für Lagerschäden und dgl. mehr. Diese Einheiten sind jedoch an sich bekannt und brauchen daher im vorliegenden Zusammenhang nicht näher erläutert zu werden.

Oberhalb des oberen Radiallagers 34, jedoch unterhalb der Öffnung 32 sind eine obere Dichtung 45 und eine untere Dichtung 46 zu erkennen. Diese, in axialer Richtung der Welle 33 wirkenden Dichtungen 40, 46 definieren somit einen oberhalb der oberen Dichtung 45 liegenden Pumpenraum 47, der mit dem unteren Gaskanal 20 in Verbindung steht, weiterhin einen Schleusenraum 48 zwischen den Dichtungen 45, 46 sowie einen ersten Antriebsraum 49 zwischen der unteren Dichtung 46 und dem oberen Radiallager 34.

Weiterhin sei der Raum zwischen oberem Radiallager 34 und Rotorwicklung 37 bzw. Statorwicklung 38 als zweiter Antriebsraum 50, der Raum zwischen Rotorwicklung 37 bzw. Statorwicklung 51 und der Raum unterhalb des unteren Radiallagers 35, in dem sich auch die federnde Abstützung 36 befindet, als vierter Antriebsraum 52 bezeichnet.

An das Antriebsteil 12 des Gebläses 10 sind verschiedene Druckmittelkreisläufe angeschlossen.

Eine Druckluftpumpe 55 bzw. ein übliches Druckluftaggregat ist über eine Druckluftleitung 56 mit dem ersten Antriebsraum 49 verbunden.

Zur Schmierung und Kühlung der verschiedenen Lager-und Antriebselemente ist Öl 59 in einer Ölwanne 60 vorgesehen. Die Ölwanne 60 ist an einen Wärmetauscher 61 angeschlossen, um das Öl 59 ständig auf einer vorbestimmten niedrigen Temperatur zu halten.

Eine Schmierölpumpe 62 fördert Öl 59 aus der Ölwanne 60 in eine erste Schmierölleitung 63, die das Gehäuse 30 in Richtung der Achse der Welle 33 durchsetzt. Die erste Schmierölleitung 63 setzt sich axial in der Welle 33 fort und verläuft dann radial nach außen, um ebenfalls im ersten Antriebsraum 49 zu enden.

Eine zweite Schmierölleitung 64 zweigt im vierten Antriebsraum 52 von der ersten Schmierölleitung 63 ab und dient zur unmittelbaren Versorgung des unteren Radiallagers 35.

Eine dritte Schmierölleitung 65 führt aus dem zweiten Antriebsraum 50 weg. Sie vereinigt sich mit einer aus dem dritten Antriebsraum 51 kommenden vierten Schmierölleitung 66 und einer aus dem vierten Antriebsraum 52 kommenden fünften Schmierölleitung 67 und führt in die Ölwanne 60 zurück.

Dem Öl 59 kann ein verflüssigbares Gas, beispielsweise Frigen, zugemischt sein. Das mit verflüssigtem Frigen versetzte Öl gelangt zu den verschiedenen Kühl-und Schmierpunkten, wobei infolge der dort herrschenden Temperatur das Frigen verdampft und durch die Verdampfungskälte der Kühl-prozeß weiter gefördert wird.

Das Frigen gelangt nun im gasförmigen Zustand in die Ölwanne 60 zurück. Es wird dort abgesaugt und einem Verdichter 68 zugeführt, der es so weit komprimiert, daß es wieder verflüssigt wird. Das verflüssigte Frigen wird nun dem Öl 59 wieder beigemengt.

Weiterhin ist eine Vakuumpumpe 70 vorgesehen, der eingangsseitig ein Ölabscheider 71 vorgeordnet ist. Vom Ölabscheider 71 führt aus dessen Ölsumpf eine Öl-Rückführleitung 72 über eine Rücköilpumpe 73 in die Ölwanne 60.

Eingangsseitig ist der Ölabscheider 71 mit einer Saugleitung 74 verbunden, die zum Schleusenraum 78 führt.

Weiterhin ist eine Kühlölpumpe 75 vorgesehen, die Öl 59 aus der Ölwanne 60 fördert und zwar an eine erste Kühlölleitung 76, die in den Bereich der Statorwicklung 38 führt und diese kühlt. Von dort führt eine zweite Kühlölleitung 77 zurück in die Ölwanne 60.

Schließlich sind an der Saugleitung 74 und am Pumpenraum 47 ein erster Drucksensor 78 bzw. ein zweiter Drucksensor 79 vorgesehen, die mit einem Regler 80 in Wirkverbindung stehen. Der Regler 80 ist ausgangsseitig an Steuereingänge der Vakuumpumpe 70 bzw. der Druckluftpumpe 55 angeschlossen. Außerdem kann, bei Anwendung des erfindungsgemäßen Gebläses 10 bei einem Laser, der Regler 80 auch an die Vakuumpumpe des Lasers angeschlossen sein.

Die Wirkungsweise des Gebläses 10, wie dies anhand der Fig. 1 geschildert wurde, ist wie folgt:

Durch Einstellung des Versorgungsaggregates 39, insbesondere dessen Ausgangsfrequenz und Ausgangsleistung kann das Geblä se 10 aus der Ruhestellung hochgefahren werden. Bei niedrigen Drehzahlen, wie sie während des Hochlaufens des Gebläses 10 auftreten, herrscht zunächst im Pumpenraum 47 ein verhältnismäßig niedriger Druck. Über die Sensoren 78, 79 wird dieser Druck, ebenso wie der Druck im Schleusenraum 48 erfaßt und es wird die Vakuumpumpe 70 so eingestellt, daß über die obere Dichtung 45 ein definiertes Druckgefälle eintritt. Auch wird die Druckluftpumpe 55 so eingestellt, daß der Schmiermitteldruck im ersten Antriebsraum 49 einen zu den beiden vorgenannten Drücken entsprechenden Druck einnimmt.

Wie man deutlich aus Fig. 1 erkennen kann, ist die Welle 33 "fliegend" gelagert, weil sich die Antriebselemente, die durch die Rotorwicklung 37 und die Statorwicklung 38 symbolisiert sind, zwischen den Radiallagern 34, 35 befinden. Die axiale Abstützung der Welle 33 wird zum einen über die federnde Abstützung 36 am unteren Ende der Welle 33 und zum anderen über die Druckeinstellung im Pumpenraum 47 erreicht.

Das Gebläse 10 wird vorzugsweise so betrieben, daß die Nenndrehzahl im überkritischen Bereich, d.h. oberhalb der Eigenresonanz des beweglichen Systems liegt.

Hierdurch ergibt sich die in den Figuren deutlich erkennbare leichte und kompakte Bauweise bei gleichzeitiger Reduzierung der Lagerkräfte, sicherem Betrieb, auch im kritischen Drehzahlbereich, wobei die Lagerschalen 92, 118, die ihrerseits "-schwimmend" aufgehängt sind, eine Lagerdämpfung in der Ebene beider Radiallager 34, 35 bewirken. Auch dies trägt zu geringen Schwingungsamplituden und damit optimaler Laufruhe des Gebläses 10 bei.

Nach Erreichen der Nenndrehzahl befinden sich alle Schmier-, Öl-und sonstigen Druckmittelsysteme im Gleichgewicht.

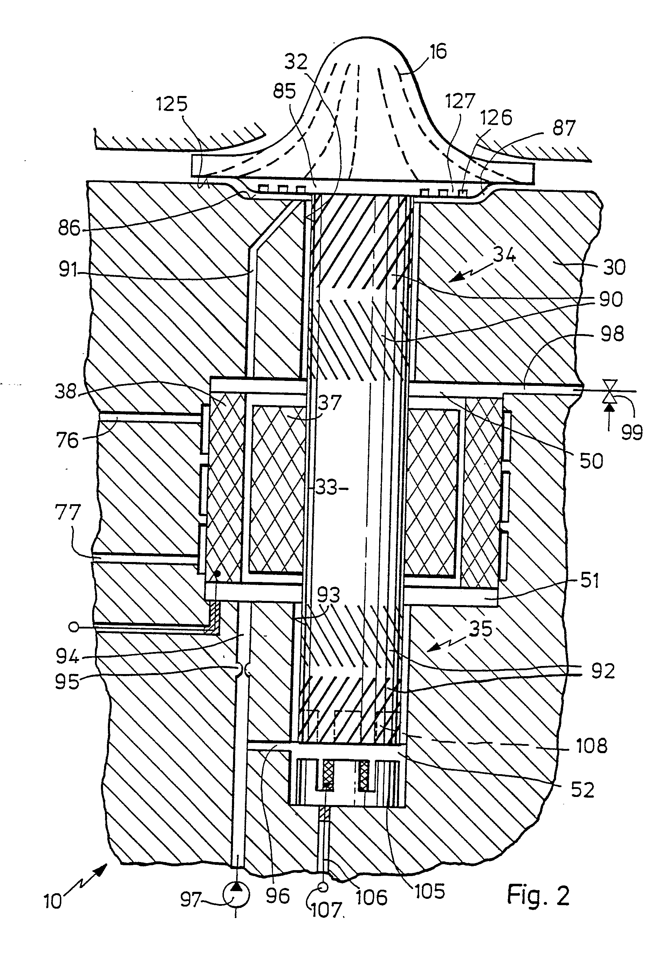

Fig. 2 zeigt weitere Einzelheiten eines Gebläses 10, ähnlich dem in Fi. 1, jedoch mit Luftlagern.

Der Radialförderer 16 in der Darstellung gemäß Fig. 2 ist an seiner Unterseite 125 mit einem axialen Ansatz 85 versehen, der an eine zugehörige Aussparung 86 in der Oberseite des Gehäuses 30 angepaßt ist. Zwischen dem Ansatz 85 und der Aussparung 86 befindet sich somit ein - schmaler ringförmiger Raum 87.

Die Welle 33 ist in ihrem, an den Radialförderer 16 angrenzenden Bereich mit einem oberen Fischgrät-Luftlager 90 versehen, das in ansich bekannter Weise zwei axial versetzte Bereiche schräger Rillen aufweist. Ein erster Kanal 91 umgeht das obere Fischgrät-Luftlager 90, indem es von der Ecke im Übergang zwischen Zwischenraum 87 und Öffnung 32 wegführt, dann parallel zur Achse der Welle 33 verläuft und - schließlich im zweiten Antriebsraum 50 mündet.

Am unteren Ende der Welle 33 ist ein unteres Fischgrät-Luftlager 92 vorgesehen, das entsprechend dem oberen Fischgrät-Luftlager 90 ausgebildet ist. Das untere Fischgrät-Lager 92 läuft in einer axialen Bohrung 93 des Gehäuses 30. Ein zweiter Kanal 94, in dem eine Drossel 95 angeordnet ist, umgeht das untere Fischgrät-Luftlager 92, indem er vom dritten Antriebsraum 51 axial nach unten und dann mit einer Stichleitung 96 zum vierten Antriebsraum 52 führt. Der zweite Kanal 94 setzt sich über den Anschluß der Stichleitung 96 hinaus axial fort und ist dort an eine zweite Druckluftpumpe 97 angeschlossen. Weiterhin führt ein Abströmkanal 98 vom zweiten Antriebsraum 50 über eine einstellbare Drossel 99 ins Freie. Unter "Luft" kann im vorliegenden Zusammenhang auch ein beliebiges Gas oder Gasgemisch verstanden werden.

Die Bohrung 93 ist als Sackbohrung ausgebildet und nimmt an ihrem Grund einen Elektromagneten 105 auf, der über eine Anschlußleitung 106 mit einer Anschlußbuchse 107 verbunden ist. Gegenüber den Pol-Stirnflächen des Elektromagneten 105 befinden sich magnetisierte Zonen 108 am unteren Ende der Welle 33.

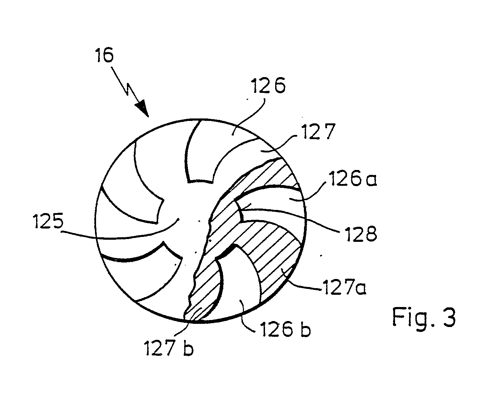

Wie man insbesondere auch aus Fig. 3 erkennen kann, ist die Unterseite 125 des Radialförderers 16 mit Spiralnuten 126, 126a, 126b.... versehen, zwischen denen sich entsprechende Stege 127, 127a, 127b.... befinden. Die Spiralnuten 126 enden innen in einem Abstand 128 von der Drehachse des Radialförderers 16. Es versteht sich, daß die Spiralnuten 126 in den Fig. 2 und 3 nicht maßstäblich eingezeichnet sind, insbesondere liegt ihre Tiefe lediglich in der Größenordnung von einem hundertstel Millimeter, vorzugsweise nur einigen $\mu$.

Die Wirkungsweise der Anordnung gemäß Fig. 2 und 3 ist wie folgt:

Die Spiralnuten 126 an der Unterseite 125 des Radialförderers 16 haben bei entsprechenden Drehzahlen der Welle 33 einen doppelten Nutzen. Zum einen dienen sie als Axiallager für die Welle 33 mit aufgesetztem Radialförderer 16, zum anderen dienen sie aber auch als Pumpe für die als Radiallager wirkenden Fischgrät-Luftlager 90 und 92.

Bei einem praktischen Ausführungsbeispiel der Erfindung erhöht das durch die Spiralnuten 126 gebildete Axial-Spiralrillenlager den Druck aus dem Pumpenraum 47 von beispielsweise 100 mbar auf das Doppelte, so daß sich damit auch eine doppelte Tragfähigkeit der Lager ergibt.

Über den ersten Kanal 91 und den zweiten Kanal 94 wird, sofern keine zweite Druckluftpumpe 97 vorgesehen ist, auch das untere Fischgrät-Luftlager 92 von der durch die Spiralnuten 126 gebildeten Pumpe mit Luft versorgt.

Das untere Ende der Welle 33, das in der Bohrung 93 läuft, wirkt wie ein Pumpenkolben.

Man kann daher bei einer Variante der Erfindung durch Anschluß der zweiten Druckluftpumpe 97 den vierten Antriebsraum 52 gesteuert unter Druck setzen und damit die Welle 33 axial be-oder entlasten. Dies ist von besonderer Bedeutung, beim An-oder Auslaufen des Gebläses 10.

Hierzu muß man sich vor Augen führen, daß an der Welle 33 mit aufgesetzten Radialförderer 16 im Betrieb im wesentlichen drei axial wirkende Kräfte angreifen.

Zum einen wirken auf den Radialförderer 16 nach oben gerichtete Saugkräfte ein. Auch die Kraft des Axiallagers, das durch die Spiralnuten 126 gebildet wird, wirkt in axialer Richtung nach oben. Dem entgegengesetzt wirkt die nach unten gerichtete Gewichtskraft.

Bei der Drehzahl Null ist ausschließlich die Gewichtskraft vorhanden. Jedoch hebt bereits bei relativ kleinen Drehzahlen die Welle 33 mit Radialförderer 16 infolge der nach oben gerichteten Axiallagerkraft und Saugkraft ab, wobei diese beiden Kräfte bei sich erhöhender Drehzahl mehr und mehr überwiegen.

Es ist daher erforderlich, für höhere Drehzahlen zusätzlich eine nach unten gerichtete Kraft vorzusehen bzw. bei sehr kleinen Drehzahlen zunächst eine nach oben gerichtete Hilfskraft einzustellen, die dann bei höheren Drehzahlen entfällt.

Hierzu kann einmal über die zweite Druckluftpumpe 97 bei kleinen Drehzahlen ein Überdruck im vierten Antriebsraum 52 eingestellt werden, der sich aus einer Durchflußrate und der Drossel 95 ergibt, wobei die Durchflußrate mittels der einstellbaren Drossel 99 vorgewählt werden kann.

Zum anderen kann aber auch bei einer Variante der Erfindung der Elektromagnet 105 zusammen mit den magnetisierten Zonen 108 am unteren Ende der Welle 33 verwendet werden.

Der Elektromagnet 105 ist als Permanentmagnet ausgebildet, der mit einer Erregerwicklung versehen ist, um die Kraft des Permanentmagneten schwächen zu können. Die Polung der Permanentmagneten einerseits und der Zonen 108 andererseits ist dabei so gewählt, daß das untere Ende der Welle 33 von dem Permanentmagneten angezogen wird.

Bei Stillstand der Welle 33 und bei niedrigen Drehzahlen wird die Magnetwicklung erregt, so daß die Kraft des Permanentmagneten kompensiert wird. Die Welle 33 wird somit bei diesen niedrigen Drehzahlen nicht axial nach unten belastet. Erst bei Erreichen höherer Drehzahlen wird die Erregerwicklung entregt und die Anziehungskraft des Permanentmagneten zu den Zonen 108 zieht die Welle 33 nach unten, so daß hierdurch die Axiallagerkraft und die Saugkraft kompensiert werden.

**Ansprüche**

1. Gebläse zum Umwälzen großer Gasmengen, insbesondere für Hochleistungs-Laser nach dem Gastransport-Prinzip, mit einem Radialförderer - (16), der in einer Verbindungsstrecke zwischen zwei Gaskanälen (18, 20) eines Gasförderteils (11) angeordnet ist, mit einem Antriebsteil (12), der eine mit dem Radialförderer (16) drehstarr verbundene Welle (33) aufweist, die in einem druckdichten Gehäuse (30) axial und radial gelagert sowie mit einem Antrieb (37, 38) versehen ist, wobei eine Unterseite (125) des Radialförderers (16), eine Oberseite (Aussparung 86) des Gehäuses (30), ein dazwischen liegender erster Gasraum (87) sowie eine Anordnung von Spiralnuten (126, 126a, 126b), ein Axial-Spirarillenlager bilden, wobei ferner die Welle (33) dicht unterhalb des Axial-Spiralrillenlagers in einer Öffnung (32) des Gehäuses (30) dicht geführt und dort mit einem ersten Luft-Radial-Drehlager (90) versehen ist, wobei weiter die Öffnung - (32) in einen zweiten Gasraum (50, 51) mündet, den die Welle (33) durchsetzt und in dem sie mit Antriebselementen versehen ist, wobei weiter die Welle (33) an ihren vom Radialförderer (16) abgewandten Ende in einer mit der Öffnung (32) fluchtenden Sackbohrung (93) dicht geführt und dort mit einem zweiten Luft-Radial-Drehlager (92) versehen ist und wobei schließlich zwischen dem freien Ende der Welle (33) und dem Grund der Sackbohrung - (93) ein dritter Gasraum (52) vorhanden ist, in dem Mittel zum axialen Abstützen der Welle (33) angeordnet sind, dadurch gekennzeichnet, daß die Unterseite (125) des Radialförderers (16) mit den Spiralnuten (126, 126a, 126b) versehen ist, daß ein erster Kanal (91) den ersten Gasraum (87) mit dem zweiten Gasraum (50, 51) verbindet, daß ein zweiter Kanal (94) den zweiten Gasraum (50, 51) an den dritten Gasraum (52) anschließt und daß ein Abströmkanal (98) vom zweiten Gasraum (50, 51) zum Außenraum führt.

2. Gebläse nach Anspruch 1, dadurch gekennzeichnet, daß im Abströmkanal (98) eine einstellbare Drossel (99) angeordnet ist.

3. Gebläse nach Anspruch 1 oder 2, dadurch gekennzeichnet, daß eine Druckgaspumpe (97) an den dritten Gasraum (52) angeschlossen und daß im zweiten Kanal (94) eine Drossel (95) angeordnet ist.

4. Gebläse nach Anspruch 3, dadurch gekennzeichnet, daß die Druckgaspumpe (97) mit einem Gas betrieben wird, das mit dem vom Gebläse geförderten Gas übereinstimmt.

5. Gebläse nach einem der Ansprüche 1 bis 4, dadurch gekennzeichnet, daß eine federnde axiale Stützkraft für die Welle (33) als Magnetkraft aufgebracht wird.

6. Gebläse nach Anspruch 5, dadurch gekennzeichnet, daß das untere Ende der Welle (33) mit magnetisierten Zonen (108) versehen ist und daß im Gehäuse (30) unterhalb des Endes der Welle - (33) ein Elektromagnet (105) angeordnet ist.

7. Gebläse nach Anspruch 6, dadurch gekennzeichnet, daß der Elektromagnet (105) aus einem das untere Ende der Welle (33) anziehenden Permanentmagneten mit einer die Wirkung des Permanentmagneten schwächenden Erregerwicklung besteht.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CH-A- 423 075 (BROWN BOVERI)<br><br>* Seite 1, Zeilen 38-67; Figur; Seite 2, Zeilen 5-69 *<br><br>--- | 1,2,3,4 | F 04 D 29/04<br>H 01 S 3/03 |
| A | GB-A- 790 009 (HARLAND ENGINEERING)<br>* Seite 1, Zeile 75 - Seite 2, Ende; Figuren *<br><br>--- | 1 | |
| A | US-A-3 022 935 (FROST)<br>* Spalte 3, Zeilen 10-75; Figuren 1,3 *<br><br>--- | 1 | |
| A | GB-A- 301 931 (INTERNATIONAL GENERAL ELECTRIC)<br>* Seite 1, Zeile 66 - Seite 2, Zeile 8; Figur *<br><br>--- | 1 | RECHERCHIERTE SACHGEBIETE (Int. Cl.4)<br><br>F 04 D 29/00<br>H 01 S 3/00<br>F 16 C 33/00 |
| A | GB-A-2 130 655 (SEIKO INSTRUMENTS)<br><br>--- | | |
| A | FR-A-2 161 180 (CIT ALCATEL)<br><br>----- | | |

Der vorliegende Recherchenbericht wurde für alle Patentansprüche erstellt.

| Recherchenort | Abschlußdatum der Recherche | Prüfer |
|---|---|---|
| DEN HAAG | 28-04-1987 | KAPOULAS T. |